# EUROPÄISCHE PATENTANMELDUNG

(11) **EP 3 623 413 A1**
(43) Veröffentlichungstag der Anmeldung: **18.03.2020**
(21) Anmeldenummer: 18194783.9
(22) Anmeldetag: 17.09.2018
(51) Int. Cl.: C08G 79/00, C08G 64/00, C08G 64/08, C08G 64/16, C08L 69/00

(54) **VERFAHREN ZUR HERSTELLUNG SELENHALTIGER POLYCARBONATE**

(71) Anmelder: Evonik Operations GmbH, 45128 Essen (DE)
(72) Erfinder: WALDVOGEL, Siegfried R., 55435 Gau-Algesheim (DE); QUELL, Thomas, 2030 Antwerpen (BE); FRANKE, Robert, 45772 Marl (DE); DYBALLA, Katrin Marie, 45657 Reckinghausen (DE); FRIDAG, Dirk, 45721 Haltern am See (DE)
(74) Vertreter: Evonik Patent Association

(57) **Zusammenfassung**

Verfahren zur Herstellung selenhaltiger Polycarbonate.

## Beschreibung

Die Erfindung betrifft ein Verfahren zur Herstellung selenhaltiger Polycarbonate.

Polycarbonate sind eine wichtige Klasse von Kunststoffen die sich durch ihren amorphen, wenig kristallinen Aufbau und gute Transparenz auszeichnen. Ihre Wärmebeständigkeit, elektrisch isolierende Eigenschaften und die hohe Schlagzähigkeit machen sie für viele Anwendungsbereiche wie z.B. der Optik interessant. Als Grundlage für kommerziell genutzte Polycarbonate wird vor allem Bisphenol-A genutzt.

Die kommerzielle Herstellung von Polycarbonaten erfolgt heute vor allem durch Polymerisation an der Grenzfläche zwischen organischer Phase (Dichlormethan und Phosgen) und wässriger Phase (Na-Salz des Bisphenols und Natronlauge). Eine weitere Möglichkeit der Polycarbonatherstellung bietet die Umesterung von Diphenylcarbonat mit Bisphenol-A unter vermindertem Druck um entstehendes Phenol zu entfernen. Durch eine doppelte Phosgenierung lassen sich Biphenole wie Bisphenol-A zu den entsprechenden Chlorameisensäureestern umsetzten.

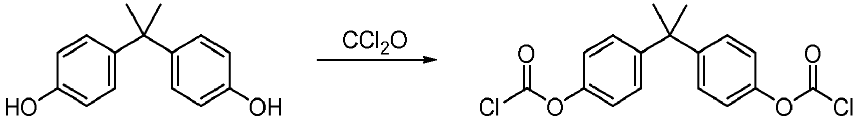

Solche Chlorameisensäureester können mit Bisphenol-A in einer Polykondesnation zu Polycarbonaten umgesetzt werden.

Bisherige Versuche die Eigenschaften von Polycarbonaten zu beeinflussen wurden vor allem mit unterschiedlich substituierten Bisphenolen (z.B. Bisphenol-F, Bisphenol-C, Bisphenol-AP, Bisphenol-BP) unternommen. Diese sind zum Teil schwer zugänglich oder sterisch gehindert und somit weniger flexibel als Bisphenol-A, was die chemischen Eigenschaften negativ beeinflusst.

Der Erfindung lag die Aufgabe zugrunde, ein Verfahren bereitzustellen, mit welchem modifizierte Polycarbonate hergestellt werden können. Insbesondere sollte das Polymer direkt in der Kette und nicht nur über die Substituenten modifiziert werden.

Gelöst wird die Aufgabe durch eine Verfahren nach Anspruch 1.

Verfahren umfassend die Verfahrensschritte:
a) Umsetzung einer Verbindung der allgemeinen Formel (**I**) mit Phosgen zu einer Verbindung der allgemeinen Formel (**II**): 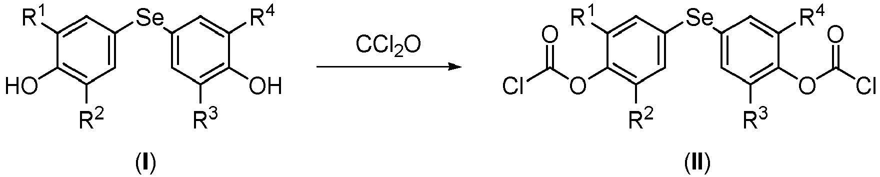 wobei
   R¹, R², R³, R⁴ jeweils unabhängig voneinander ausgewählt sind aus -(C₁-C₁₂)-Alkyl, -(C3-C12)-Cycloalkyl, -(C₃-C₁₂)-Heterocycloalkyl, -(C₆-C₂₀)-Aryl, -(C₃-C₂₀)-Heteroaryl, Halogen
      und
   R¹, R², R³, R⁴ falls diese für -(C₁-C₁₂)-Alkyl, -(C₃-C₁₂)-Cycloalkyl, -(C₃-C₁₂)-Heterocycloalkyl, - (C₆-C₂₀)-Aryl, -(C₃-C₂₀)-Heteroaryl oder -(C₆-C₂₀)-Heteroaryl stehen,
   jeweils unabhängig voneinander mit einem oder mehreren Substituenten ausgewählt aus -(C₁-C₁₂)-Alkyl, -(C₃-C₁₂)-Cycloalkyl, -(C₃-C₁₂)-Heterocycloalkyl, -O-(C₁-C₁₂)-Alkyl, -O-(C₁-C₁₂)-Alkyl-(C₆-C₂₀)-Aryl, -O-(C₃-C₁₂)-Cycloalkyl, -S-(C₁-C₁₂)-Alkyl, -S-(C₃-C₁₂)-Cycloalkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₃-C₂₀)-Heteroaryl, -(C₃-C₂₀)-Heteroaryl-(C₁-C₁₂)-Alkyl, -(C₃-C₂₀)-Heteroaryl-O-(C₁-C₁₂)-Alkyl, Halogen substituiert sein können;
b) Umsetzung der Verbindung der allgemeinen Formel (**II**) aus a) mit entweder
   einer Verbindung der allgemeinen Formel (**I**) oder
   einer Verbindung der allgemeinen Formel (**III**) 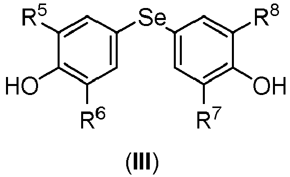 wobei
   R⁵, R⁶, R⁷, R⁸ jeweils unabhängig voneinander ausgewählt sind aus -(C₁-C₁₂)-Alkyl, -(C₃-C₁₂)-Cycloalkyl, -(C₃-C₁₂)-Heterocycloalkyl, -(C₆-C₂₀)-Aryl, -(C₃-C₂₀)-Heteroaryl, Halogen
      und
   R⁵, R⁶, R⁷, R⁸, falls diese für -(C₁-C₁₂)-Alkyl, -(C₃-C₁₂)-Cycloalkyl, -(C₃-C₁₂)-Heterocycloalkyl, - (C₆-C₂₀)-Aryl, -(C₃-C₂₀)-Heteroaryl oder -(C₆-C₂₀)-Heteroaryl stehen,
   jeweils unabhängig voneinander mit einem oder mehreren Substituenten ausgewählt aus -(C₁-C₁₂)-Alkyl, -(C₃-C₁₂)-Cycloalkyl, -(C₃-C₁₂)-Heterocycloalkyl, -O-(C₁-C₁₂)-Alkyl, -O-(C₁-C₁₂)-Alkyl-(C₆-C₂₀)-Aryl, -O-(C₃-C₁₂)-Cycloalkyl, -S-(C₁-C₁₂)-Alkyl, -S-(C₃-C₁₂)-Cycloalkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₃-C₂₀)-Heteroaryl, -(C₃-C₂₀)-Heteroaryl-(C₁-C₁₂)-Alkyl, -(C₃-C₂₀)-Heteroaryl-O-(C₁-C₁₂)-Alkyl, Halogen substituiert sein können;
   wobei die vier Paarungen nicht alle zeitgleiche für jeweils in der Paarung gleichen Rest stehen: R¹ und R⁵, R² und R⁶, R³ und R⁷, R⁴ und R⁸;
      zu 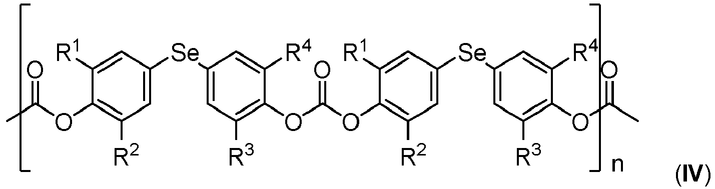 beziehungsweise 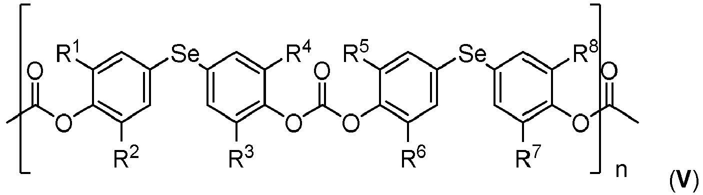
und n für eine Zahl steht aus dem Bereich von 10 bis 100.

Durch das Merkmal, dass die vier Paarungen nicht alle zeitgleiche für jeweils in der Paarung gleichen Rest stehen R¹ und R⁵, R² und R⁶, R³ und R⁷, R⁴ und R⁸, wird ausgeschlossen, dass die Verbindung (**I**) identisch mit der Verbindung (**III**) ist.

In einer Ausführungsform steht n für eine Zahl aus dem Bereich von 10 bis 40.

In einer Variante des Verfahrens sind R¹, R², R³, R⁴ jeweils unabhängig voneinander ausgewählt aus -(C₁-C₁₂)-Alkyl, -(C₆-C₂₀)-Aryl, Halogene, -O-(C₁-C₁₂)-Alkyl.

In einer Variante des Verfahrens sind R⁵, R⁶, R⁷, R⁸ jeweils unabhängig voneinander ausgewählt aus -(C₁-C₁₂)-Alkyl, -(C₆-C₂₀)-Aryl, Halogene, -O-(C₁-C₁₂)-Alkyl.

In einer Variante des Verfahrens sind R¹, R², R³, R⁴ jeweils unabhängig voneinander ausgewählt aus -(C₁-C₅)-Alkyl, -(C₆)-Aryl, Halogene.

In einer Variante des Verfahrens sind R⁵, R⁶, R⁷, R⁸ jeweils unabhängig voneinander ausgewählt aus -(C₁-C₅)-Alkyl, -(C₆)-Aryl, Halogene.

In einer Variante des Verfahrens erfolgt die Umsetzung im Verfahrensschritt a) bei einer Temperatur von kleiner 0 °C.

In einer Variante des Verfahrens erfolgt die Umsetzung im Verfahrensschritt a) unter Zusatz einer Verbindung der allgemeinen Formel (**A**): 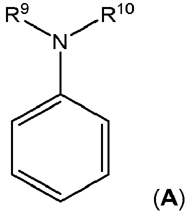 und die Reste R⁹ und R¹⁰ jeweils unabhängig voneinander für -(C₁-C₁₂)-Alkyl stehen.

Vorzugsweise stehen R⁹ und R¹⁰ jeweils für -CH₃.

In einer Variante des Verfahrens erfolgt die Umsetzung im Verfahrensschritt a) unter Zusatz einer Verbindung der allgemeinen Formel (**B**): 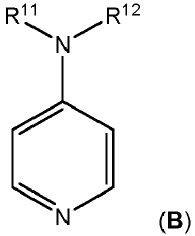 und die Reste R¹¹ und R¹² jeweils unabhängig voneinander für -(C₁-C₁₂)-Alkyl stehen.

Vorzugsweise stehen R¹¹ und R¹² jeweils für -CH₃.

In einer Variante des Verfahrens erfolgt die Umsetzung im Verfahrensschritt b) bei einer Temperatur von größer als Raumtemperatur.

In einer Variante des Verfahrens erfolgt die Umsetzung im Verfahrensschritt b) unter Zusatz einer Verbindung der allgemeinen Formel (**C**): 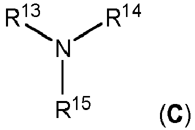 und die Reste R¹³, R¹⁴, R¹⁵ jeweils unabhängig voneinander für -(C₁-C₁₂)-Alkyl stehen.

Vorzugsweise stehen R¹³, R¹⁴, R¹⁵ jeweils für -CH₂-CH₃.

In einer Variante des Verfahrens erfolgt die Umsetzung im Verfahrensschritt a) unter Zusatz einer Verbindung der allgemeinen Formel (**D**): 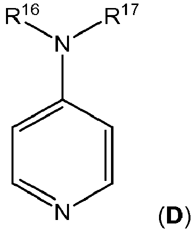 und die Reste R¹⁶ und R¹⁷ jeweils unabhängig voneinander für -(C₁-C₁₂)-Alkyl stehen.

Vorzugsweise stehen R¹⁶ und R¹⁷ jeweils für -CH₃.

In einer Variante des Verfahrens umfasst dieses den zusätzlichen Verfahrensschritt:
c) aufreinigen des Polymers aus b) durch Ausfällen aus Methanol.

In einer Variante des Verfahrens erfolgt der Verfahrensschritt a) unter Argon-Atmosphäre.

In einer Variante des Verfahrens erfolgt der Verfahrensschritt b) unter Argon-Atmosphäre.

Im Folgenden wird die Erfindung anhand von Ausführungsbeispielen näher erläutert.

### Allgemeine Methoden

### Lösungsmittel

Die Lösungsmittel Cyclohexan und Essigsäureethylester wurden vor der Verwendung destillativ gereinigt. Alle anderen Lösungsmittel wurden als *pro analysi*-Ware direkt verwendet.

### Kernresonanzspektroskopie (NMR)

Die NMR-spektroskopischen Untersuchungen wurden in der dafür verantwortlichen Abteilung des Organischen Institutes der *Johannes Gutenberg-Universität Mainz* durchgeführt. Die Messungen wurden an einem Multikernresonanzspektrometer des Typs AV II 400 der Firma *Bruker, Analytische Messtechnik, Karlsruhe,* durchgeführt. Als Lösungsmittel wurde deuteriertes Chloroform (CDCl₃) oder deuteriertes Dimethylsulfoxid (DMSO-d₆) verwendet. Die ¹H- und ¹³C-Spektren wurden gemäß der NMR Solvent Data Chart der Fa. *Cambridge Isotopes Laboratories,* USA, gemäß ihrem Restgehalt an nicht deuteriertem Lösungsmittel kalibriert. Für die Zuordnung der ¹H- sowie ¹³C-Signale wurde sich teilweise durch H,H-COSY-, H,C-HMBC- und H,C-HSQC-Spektren beholfen. Die chemische Verschiebung wurde als δ-Werte in ppm angegeben. Die Abkürzungen der Multiplizitäten der NMR-Signale lauten: s (Singulett), d (Dublett), t (Triplett), q (Quartett), m (Multiplett), dd (Dublett von Dublett), dt (Dublett von Triplett), tq (Triplett von Quartett). Die Kopplungskostanten *J_{x,y}* wurden mit der Anzahl eingeschlossener Bindungen in Hertz (Hz) angegeben. Bei der Signalzuordnung entspricht die Nummerierung den Bezifferungen, die in den Formelschemata angegeben sind. Diese muss nicht zwangsläufig mit der *IUPAC*-Nomenklatur übereinstimmen.

### Massenspektrometrie

Die Elektrosprayionisation-Messungen (ESI+) sowie die Felddesorption-Messungen (FD) wurden in der analytischen Abteilung des Instituts für Organische Chemie der *Johannes Gutenberg-Universität Mainz* durchgeführt. Hierbei wurden die Geräte QTof Ultima 3 der Fa. *Waters Micromasses,* Milford, Massachusetts bzw. MAT 95 der Fa. *Finnigan,* Bremen verwendet.

### Dünnschichtchromatographie (DC)

Für Trennungen mittels Dünnschichtchromatographie wurden Aluminium-Fertigplatten mit Kieselgel 60 F₂₅₄ der Fa. *Merck KGaA,* Darmstadt verwendet. Die R_{f}-Werte sind in Abhängigkeit von dem verwendeten Laufmittelgemisch angegeben. Mittels Fluoreszenzauslöschung bei einer Wellenlänge von λ=254 nm konnten die Substrate identifiziert werden.

### Schmelzpunktbestimmung

Die Schmelzpunktmessungen erfolgten mit Hilfe des Schmelzpunktbestimmungsgerätes SMP3 der Fa. *Bibby Sterilin*, Stone, Vereinigtes Königreich und sind unkorrigiert.

### Allgemeine Arbeitsvorschriften

### Allgemeine Arbeitsvorschrift Phosgenierung des Monomers (AAV1)

In einem 50 mL-Schlenkkolben mit Magnetrührstab und Septum wurde das p-verknüpfte Diarylselenid (1.0 Äq.) in einer 15%igen toluolischen Phosgen-Lösung (3.0 Äq.) gelöst. Die Reaktionsmischung wurde mittels Trockeneis/Aceton-Bad auf -40 °C gekühlt. Unter Argon-Atmosphäre wurde mit Hilfe einer Spritze eine Lösung von *N,N*-Dimethylanilin (2.0 Äq.) und *N,N*-Dimethylaminopyridin (0.1 Äq.) in trockenem Toluol (3.8 Äq.) über einen Zeitraum von 20 Minuten hinzugetropft. Im Anschluss wurde das Reaktionsgemisch sukzessive auf Raumtemperatur erwärmt und weitere 12 Stunden gerührt. Im Folgenden wurde das Reaktionsgemisch gefiltert und zusätzlich mit 50 mL trockenem Toluol gewaschen. Somit konnte das *N,N*-Dimethylanilin-Hydrochlorid entfernt werden. Überschüssiges Phosgen wurde über 2 Stunden bei vermindertem Druck dem Filtrat entzogen.

### Allgemeine Arbeitsvorschrift zur Polykondensation (AAV2)

Das p-verknüpfte Diarylselenid (30 mg, 1.00 Äq.), Triethylamin (3.00 Äq.), *N,N*-Dimethylaminopyridin (0.21 Äq.) sowie gegebenenfalls das monofunktionelle Phenol 4-*tert*-Butylphenol (0.02 bzw. 0.15 Äq.) wurden in einem 50 mL-Schlenkkolben mit Magnetrührstab und Septum vorgelegt und in trockenem Dichlormethan (125.27 Äq.) gelöst. Die Reaktionsmischung wurde mittels eines Wasserbades auf 40 °C temperiert und unter Argon-Atmosphäre eine Lösung des jeweiligen Formats der Diarylselenid-Verbindung (1.00 Äq.) in trockenem Dichlormethan (37.58 Äq.) durch eine Spritze über einen Zeitraum von 30 Minuten hinzugetropft. Im Anschluss wurde für weitere 20-30 Minuten bei 40 °C gerührt und danach auf Raumtemperatur abgekühlt. Die Reaktionsmischung wurde daraufhin in ca. 30 mL Isopropanol gegeben, worin das Polykondensat ausfiel. Dieses wurde zentrifugiert, in Dichlormethan gelöst und nochmals in Isopropanol gefällt. Durch erneutes Zentrifugieren wurde das Endprodukt erhalten.

### Charakterisierung

### Bis(3,5-dimethyl-4-chlorcarboxyphenyl)selenid (1)

Ausgehend von 2.0 g des Monomers Bis(3,5-dimethyl-4-hydroxyphenyl)selenid (**M1**) wurde nach AAV1 das Format Bis(3,5-dimethyl-4-chlorcarboxyphenyl)selenid (**1**) gewonnen. Eine Abtrennung des nicht phosgenierten Monomers wurde nicht durchgeführt. Das Produktgemisch war ein gelb-grünlicher Feststoff.

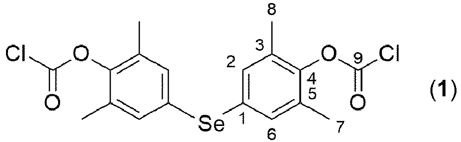

| | |
|---|---|
| Summenformel: | C₁₈H₁₆Cl₂O₄Se |
| Molmasse: | 446.18 g·mol⁻¹ |
| FD: | m/z=446.1 [M]^{+·} (Selen-Isotopenmuster) |
| DC: | R_{f}(*CH:EE,5:1* )=0.16 |
| ¹H-NMR: | (400 MHz, CDCl₃) δ [ppm]=2.21 (s, 12H, H-7, H-8), 7.19 (s, 4H, H-2, H-4). |
| ¹³C-NMR: | (100 MHz, CDCl₃) δ [ppm]=16.17 (C-7, C-8), 129.31 (C-3, C-5), 131.05 (C-4), 133.58 (C-2, C-6), 148.95 (C-9), 149.34 (C-1). |
| Smp.: | 107 °C. |

### Bis(3,5-dichlor-4-chlorcarboxyphenyl)selenid (2)

Ausgehend von 1.0 g des Monomers Bis(3,5-dichlor-4-hydroxyphenyl)selenid (**M2**) wurde nach AAV1 das Format Bis(3,5-dichlor-4-chlorcarboxyphenyl)selenid (**2**) hergestellt. Auch in diesem Fall wurde nicht umgesetztes Monomer nicht entfernt. Das Produktgemisch war ein blau bis violettes zähflüssiges Öl.

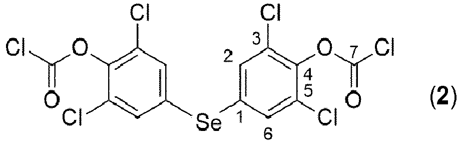

| | |
|---|---|
| Summenformel: | C₁₄H₄Cl₆O₄Se |
| Molmasse: | 527.86 g·mol⁻¹ |
| FD: | m/z=527.8 [M]^{+·} (Selen- und Chlor-Isotopenmuster) |
| DC: | R_{f}(*CH:EE,5:1* )=0.21 |
| ¹H-NMR: | (400 MHz, CDCl₃) δ [ppm]=7.50 (s, 4H, H-2, H-6). |
| ¹³C-NMR: | (100 MHz, CDCl₃) δ [ppm]=129.61 (C-3, C-5), 129.99 (C-7), 133.20 (C-2, C-6), 144.47 (C-4), 148.03 (C-1). |
| Smp.: | 86 °C. |

### Bis(3,5-dibrom-4-chlorcarboxyphenyl)selenid (3)

200 mg des Monomers Bis(3,5-dibrom-4-hydroxyphenyl)selenid (**M3**) wurden nach AAV1 zum Format Bis(3,5-dibrom-4-chlorcarboxyphenyl)selenid (**3**) umgesetzt. Nicht umgesetztes Monomer wurde nicht dem Produktgemisch entzogen. Bei letzterem handelte es sich um ein violettes Öl, das zum Feststoff erstarrte.

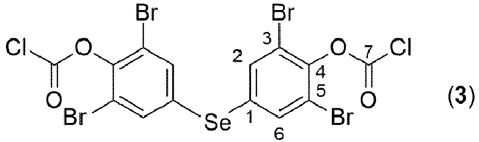

| | |
|---|---|
| Summenformel: | C₁₄H₄Br₄Cl₂O₄Se |
| Molmasse: | 705.66 g·mol⁻¹ |
| FD: | m/z=705.7 [M]^{+·} (Selen- und Brom-Isotopenmuster) |
| DC: | R_{f}(*CH:EE,5:1*)=0.26 |
| ¹H-NMR: | (400 MHz, CDCl₃) δ [ppm]=7.69 (s, 4H, H-2, H-6). |
| ¹³C-NMR: | (100 MHz, CDCl₃) δ [ppm]=118.10 (C-3, C-5), 130.97 (C-7), 136.77 (C-2, C-6), 146.77 (C-4), 147.92 (C-1). |
| Smp.: | 132 °C. |

### Poly[bis(3,5-dimethyl-4-hydroxyphenyl)selenid-carbonat (P1)

Das Polymer **(P1)** wurde aus 30 mg Bis(3,5-dimethyl-4-hydroxyphenyl)selenid **(M1),** 42 mg des Formats (**1**), 0.03 mL Triethylamin, 2 mg *N,N*-Dimethylaminopyridin sowie 0.3 mg 4-*tert*-Butylphenol nach AAV2 hergestellt.

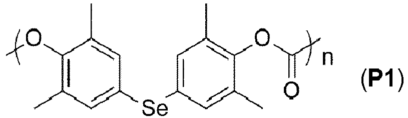

| | |
|---|---|
| Summenformel CRU: | C₁₇H₁₆O₃Se |
| Molmasse CRU: | 347.27 g·mol⁻¹ |
| ¹H-NMR: | (400 MHz, CDCl₃) δ [ppm]=1.32 (s, 0.44H, C-(CH₃)₃), 2.25 (s, 12H), 7.00 (s, 0.08H, H-3 (ar_{tert-Butylphenol)}), H-5 (ar_{tert-Butylphenol)})), 7.20 (s, 4H, H-2, H-6), 7.31 (s, 0.08H, H-2 (ar_{tert-Butylphenol)}), H-6 (ar_{tert-Butylphenol)})). |
| *T_{g}*: | 132 °C. |
| Smp.: | 159 °C. |

### Poly[bis(3,5-dichlor-4-hydroxyphenyl)selenid-carbonat] (P2)

Das Polymer (**P2**) wurde aus 30 mg des Bis(3,5-dichlor-4-hydroxyphenyl)selenid (**M2**), 39 mg des Formats (**2**), 0.03 mL Triethylamin, 2 mg *N,N*-Dimethylaminopyridin sowie 2 mg 4-*tert*-Butylphenol nach AAV2 hergestellt.

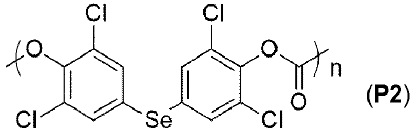

| | |
|---|---|
| Summenformel CRU: | C₁₃H₄Cl₄O₃Se |
| Molmasse CRU: | 428.94 g·mol⁻¹ |
| ¹H-NMR: | (400 MHz, CDCl₃) δ [ppm]=1.32 (s, 0.68H, C-(CH₃)₃), 7.00 (s, 0.15H, H-3 (ar_{tert-Butylphenol)}), H-5 (ar_{tert-Butylphenol)})), 7.37 (s, 0.15H, H-2 (ar_{tert-Butylphenol)}), H-6 (ar_{tert-Butylphenol)})), 7.51 (s, 4H, H-2, H-6). |
| *T_{g}*: | 18 °C. |

### Poly[bis(3,5-dimethyl-4-hydroxyphenyl)selenid-carbonat] (P3)

Das Polymer (**P3**) wurde aus 30 mg Bis(3,5-dibrom-4-hydroxyphenyl)selenid (**M3**), 37 mg des Formats (**3**), 0.02 mL Triethylamin, 1 mg *N,N*-Dimethylaminopyridin sowie 1 mg 4-*tert*-Butylphenol nach AAV2 hergestellt.

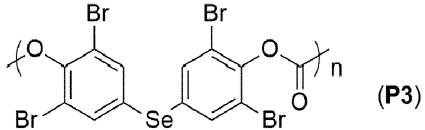

| | |
|---|---|
| Summenformel CRU: | C₁₃H₄Br₄O₃Se |
| Molmasse CRU: | 606.75 g·mol⁻¹ |
| ¹H-NMR: | (400 MHz, CDCl₃) δ [ppm]=1.32 (s, 0.87H, C-(CH₃)₃), 7.69 (s, 4H, H-2, H-6). |
| *T_{g}*: | Zersetzung während der DSC-Messung. |
| Smp.: | Zersetzung während der DSC-Messung. |

Wie die oben beschriebenen Versuche zeigen, wird die Aufgabe durch das erfindungsgemäße Verfahren gelöst.

## Patentansprüche

1. Verfahren umfassend die Verfahrensschritte:
a) Umsetzung einer Verbindung der allgemeinen Formel (**I**) mit Phosgen zu einer Verbindung der allgemeinen Formel (**II**): 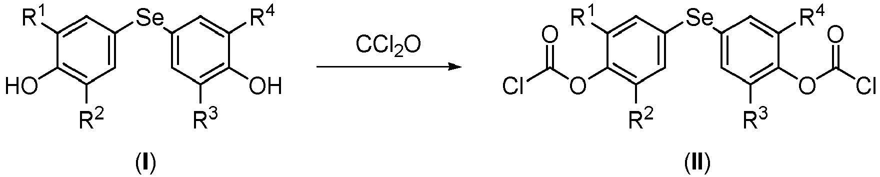 wobei
R¹, R², R³, R⁴ jeweils unabhängig voneinander ausgewählt sind aus -(C₁-C₁₂)-Alkyl, -(C₃-C₁₂)-Cycloalkyl, -(C₃-C₁₂)-Heterocycloalkyl, -(C₆-C₂₀)-Aryl, -(C₃-C₂₀)-Heteroaryl, Halogen
und
R¹, R², R³, R⁴ falls diese für -(C₁-C₁₂)-Alkyl, -(C₃-C₁₂)-Cycloalkyl, -(C₃-C₁₂)-Heterocycloalkyl, - (C₆-C₂₀)-Aryl, -(C₃-C₂₀)-Heteroaryl oder -(C₆-C₂₀)-Heteroaryl stehen,
jeweils unabhängig voneinander mit einem oder mehreren Substituenten ausgewählt aus -(C₁-C₁₂)-Alkyl, -(C₃-C₁₂)-Cycloalkyl, -(C₃-C₁₂)-Heterocycloalkyl, -O-(C₁-C₁₂)-Alkyl, -O-(C₁-C₁₂)-Alkyl-(C₆-C₂₀)-Aryl, -O-(C₃-C₁₂)-Cycloalkyl, -S-(C₁-C₁₂)-Alkyl, -S-(C₃-C₁₂)-Cycloalkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₃-C₂₀)-Heteroaryl, -(C₃-C₂₀)-Heteroaryl-(C₁-C₁₂)-Alkyl, -(C₃-C₂₀)-Heteroaryl-O-(C₁-C₁₂)-Alkyl, Halogen substituiert sein können;
b) Umsetzung der Verbindung der allgemeinen Formel (**II**) aus a) mit entweder
einer Verbindung der allgemeinen Formel (**I**) oder
einer Verbindung der allgemeinen Formel (**III**) 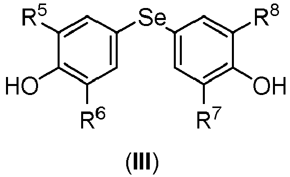 wobei
R⁵, R⁶, R⁷, R⁸ jeweils unabhängig voneinander ausgewählt sind aus -(C₁-C₁₂)-Alkyl, -(C₃-C₁₂)-Cycloalkyl, -(C₃-C₁₂)-Heterocycloalkyl, -(C₆-C₂₀)-Aryl, -(C₃-C₂₀)-Heteroaryl, Halogen
und
R⁵, R⁶, R⁷, R⁸, falls diese für -(C₁-C₁₂)-Alkyl, -(C₃-C₁₂)-Cycloalkyl, -(C₃-C₁₂)-Heterocycloalkyl, - (C₆-C₂₀)-Aryl, -(C₃-C₂₀)-Heteroaryl oder -(C₆-C₂₀)-Heteroaryl stehen,
jeweils unabhängig voneinander mit einem oder mehreren Substituenten ausgewählt aus -(C₁-C₁₂)-Alkyl, -(C₃-C₁₂)-Cycloalkyl, -(C₃-C₁₂)-Heterocycloalkyl, -O-(C₁-C₁₂)-Alkyl, -O-(C₁-C₁₂)-Alkyl-(C₆-C₂₀)-Aryl, -O-(C₃-C₁₂)-Cycloalkyl, -S-(C₁-C₁₂)-Alkyl, -S-(C₃-C₁₂)-Cycloalkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₃-C₂₀)-Heteroaryl, -(C₃-C₂₀)-Heteroaryl-(C₁-C₁₂)-Alkyl, -(C₃-C₂₀)-Heteroaryl-O-(C₁-C₁₂)-Alkyl, Halogen substituiert sein können;
wobei die vier Paarungen nicht alle zeitgleiche für jeweils in der Paarung gleichen Rest stehen: R¹ und R⁵, R² und R⁶, R³ und R⁷, R⁴ und R⁸;
zu 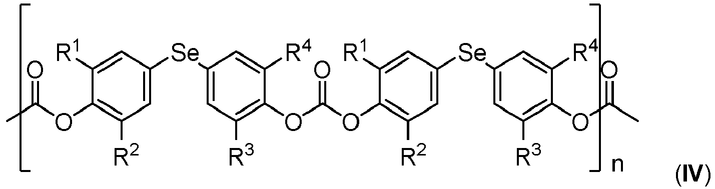 beziehungsweise 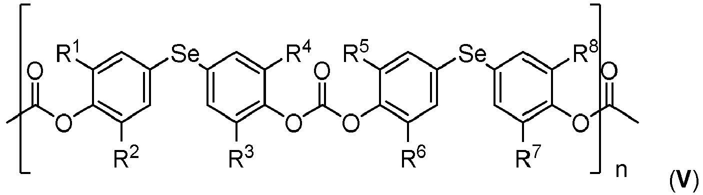
und n für eine Zahl steht aus dem Bereich von 10 bis 100.

2. Verfahren nach Anspruch 1,
wobei
R¹, R², R³, R⁴ jeweils unabhängig voneinander ausgewählt sind aus -(C₁-C₁₂)-Alkyl, -(C₆-C₂₀)-Aryl, Halogene, -O-(C₁-C₁₂)-Alkyl.

3. Verfahren nach einem der Ansprüche 1 oder 2,
wobei R⁵, R⁶, R⁷, R⁸ jeweils unabhängig voneinander ausgewählt sind aus -(C₁-C₁₂)-Alkyl, -(C₆-C₂₀)-Aryl, Halogene, -O-(C₁-C₁₂)-Alkyl.

4. Verfahren nach einem der Ansprüche 1 bis 3,
wobei R¹, R², R³, R⁴ jeweils unabhängig voneinander ausgewählt sind aus -(C₁-C₅)-Alkyl, -(C₆)-Aryl, Halogene.

5. Verfahren nach einem der Ansprüche 1 bis 4,
wobei R⁵, R⁶, R⁷, R⁸ jeweils unabhängig voneinander ausgewählt sind aus -(C₁-C₅)-Alkyl, -(C₆)-Aryl, Halogene.

6. Verfahren nach einem der Ansprüche 1 bis 5,
wobei die Umsetzung im Verfahrensschritt a) bei einer Temperatur von kleiner 0 °C erfolgt.

7. Verfahren nach einem der Ansprüche 1 bis 6,
wobei die Umsetzung im Verfahrensschritt a) unter Zusatz einer Verbindung der allgemeinen Formel (**A**) erfolgt: 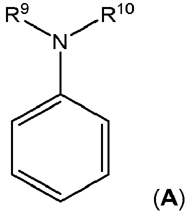 und die Reste R⁹ und R¹⁰ jeweils unabhängig voneinander für -(C₁-C₁₂)-Alkyl stehen.

8. Verfahren nach einem der Ansprüche 1 bis 7,
wobei die Umsetzung im Verfahrensschritt a) unter Zusatz einer Verbindung der allgemeinen Formel (**B**) erfolgt: 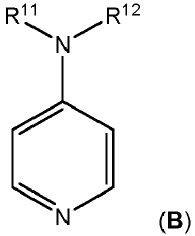 und die Reste R¹¹ und R¹² jeweils unabhängig voneinander für -(C₁-C₁₂)-Alkyl stehen.

9. Verfahren nach einem der Ansprüche 1 bis 8,
wobei die Umsetzung im Verfahrensschritt b) bei einer Temperatur von größer als Raumtemperatur erfolgt.

10. Verfahren nach einem der Ansprüche 1 bis 9,
wobei die Umsetzung im Verfahrensschritt b) unter Zusatz einer Verbindung der allgemeinen Formel (**C**) erfolgt: 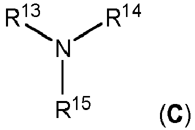 und die Reste R¹³, R¹⁴, R¹⁵ jeweils unabhängig voneinander für -(C₁-C₁₂)-Alkyl stehen.

11. Verfahren nach einem der Ansprüche 1 bis 10,
wobei die Umsetzung im Verfahrensschritt a) unter Zusatz einer Verbindung der allgemeinen Formel (D) erfolgt: 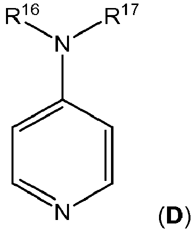 und die Reste R¹⁶ und R¹⁷ jeweils unabhängig voneinander für -(C₁-C₁₂)-Alkyl stehen.

12. Verfahren nach einem der Ansprüche 1 bis 11,
umfassend den zusätzlichen Verfahrensschritt:
c) aufreinigen des Polymers aus b) durch Ausfällen aus Methanol.

13. Verfahren nach einem der Ansprüche 1 bis 12,
wobei der Verfahrensschritt a) unter Argon-Atmosphäre erfolgt.

14. Verfahren nach einem der Ansprüche 1 bis 13,
wobei der Verfahrensschritt b) unter Argon-Atmosphäre erfolgt.
